# EUROPÄISCHE PATENTANMELDUNG

(11) **EP 0 709 242 A1**
(43) Veröffentlichungstag der Anmeldung: **01.05.1996**
(21) Anmeldenummer: 95115751.0
(22) Anmeldetag: 06.10.1995
(51) Int. Cl.: B60J 3/02

(54) **Sonnenblende für Fahrzeuge mit einem Sonnenblendenkern sowie Verfahren zum Herstellen einer Sonnenblende**

(30) Priorität: 25.10.1994 US 328862
(71) Anmelder: GEBR. HAPPICH GmbH, D-42285 Wuppertal (DE)
(72) Erfinder: Vaxelaire, Francis, F-70000 Vesoul (FR)

(57) **Zusammenfassung**

Sonnenblende mit einem Kern, der aus zwei Hälften (10, 20) geformt ist, die miteinander verbunden werden, um den Kern zu bilden. Jede der beiden Hälften (10, 20) wird mit Hilfe eines Spritzgießverfahrens aus einem thermoplastischen Material geformt. Jede Hälfte (10, 20) ist mit Ausrichtelementen (16, 26) an einer jeweiligen innen- oder gegenüberliegenden Fläche ausgebildet. Die Ausrichtelemente (16, 26) der beiden Kernhälften (10, 20) wirken zusammen, um die beiden Hälften (10, 20) zueinander auszurichten, die anschließend miteinander verbunden werden. Die Ausrichtelemente (16, 26) sind im wesentlichen entlang der gesamten Oberfläche der beiden Kernhälften (10, 20) angeordnet, um für ein exaktes Ausrichten zwischen den beiden Kernhälften (10, 20) zu sorgen. Auf jede der beiden Kernhälften (10, 20) wird ein Überzug (30) aufgebracht, bevor die beiden Kernhälften (10, 20) miteinander verbunden werden.

## Beschreibung

Die vorliegende Erfindung betrifft eine Sonnenblende für ein Fahrzeug und insbesondere eine Sonnenblende mit einem zweiteiligen Kern sowie ein Verfahren zur Formung des Sonnenblendenkernes.

Eine konventionelle Sonnenblende, wie sie in den US-Patenten Nr. 4,570,990 und 4,763,946 beschrieben ist, weist einen Kern auf, der aus zwei separaten Hälften aus polymerem Material geformt ist, die seitlich zueinander über ein zwischen den beiden Kernhälften angeordnetes Scharnier zusammengefügt sind. Eine Außenseite einer jeden der beiden Hälften weist einen aus Vinyl- oder Bezugsmaterial bestehenden Überzug auf, der eine Schaumschicht umfaßt. Der Überzug wird um eine Außenfläche einer jeden der beiden Hälften so herumgelegt, daß überstehendes Material des Überzuges in eine Innenfläche einer jeden der beiden Hälften eingeführt werden kann. Das überstehende Überzugsmaterial wird dann mit den Innenflächen der beiden Hälften verbunden, um so den Überzug am Kern zu befestigen.

Nachdem der Überzug mit den beiden Kernhälften verbunden ist, werden die beiden Hälften zusammengefaltet, indem sie um das zwischen ihnen angeordnete Scharnier geschwenkt werden. Anschließend werden die Kernhälften einer Direkterwärmung unterzogen, um ein Schmelzen des polymeren Materials zu erreichen und dadurch die Kernhälften dauerhaft miteinander zu verbinden.

Ein nach dem vorstehend beschriebenen Verfahren geformter Sonnenblendenkern erfordert jedoch die Verwendung eines Scharniers, das zunächst hergestellt und dann mit jeder der beiden Kernhälften verbunden werden muß, so daß die Kernhälften im Verhältnis zueinander ausgerichtet werden. Dies stellt ein exaktes Ausrichten der Kernhälften zueinander sicher, wenn die Kernhälften zur Schaffung des Kernes zusammengefügt werden. Durch die Verwendung eines Scharniers werden folglich die Kosten und die Anzahl der zum Formen eines Sonnenblendenkernes notwendigen Fertigungsschritte erhöht. Außerdem wird mit dem Scharnier nicht in allen Fällen ein exaktes Ausrichten zwischen den beiden Kernhälften sichergestellt, weil die beiden Kernhälften lediglich entlang einer einzelnen Linie, an der das Scharnier angeordnet ist, ausgerichtet werden.

Es ist ein Ziel der vorliegenden Erfindung, eine Fahrzeugsonnenblende mit einem Kern von geringem Gewicht sowie in konstruktiv einwandfreier Ausführung und mit einer gewünschten Weichheit bereitzustellen.

Es ist außerdem ein Ziel der vorliegenden Erfindung, eine Sonnenblende mit einem Kern, der aus zwei separaten Elementen geformt ist, die jeweils Ausrichtelemente umfassen, bereitzustellen.

Es ist weiterhin ein Ziel der vorliegenden Erfindung, einen Sonnenblendenkern, der aus zwei separaten Elementen geformt ist, die ohne die Verwendung eines Scharniers zusammengefügt werden, bereitzustellen.

Es ist darüber hinaus ein Ziel der vorliegenden Erfindung, ein Verfahren zum Formen eines Sonnenblendenkernes bereitzustellen.

Der Sonnenblendenkern nach einer bevorzugten Ausführungsform der vorliegenden Erfindung umfaßt zwei separate Kernhälften. Eine der beiden Hälften wird vorzugsweise aus einem thermoplastischen Material, wie beispielsweise Polypropylen, mittels Spritzgießen geformt.

Eine erste Hälfte des Kernes wird vorzugsweise aus einem kompakten Polypropylenmaterial geformt.

Die zweite Kernhälfte wird ebenfalls vorzugsweise aus einem thermoplastischen Material mittels Spritzgießen geformt. Vorzugsweise wird die zweite Kernhälfte aus einem Polypropylen und Talkum umfassenden Material geformt.

Jede der beiden Hälften, die den Kern bilden, weist vorzugsweise Ausrichtelemente auf, um die Kernhälften im Verhältnis zueinander auszurichten. Die Ausrichtelemente einer jeden der ersten und zweiten Kernhälften verlaufen vorzugsweise im wesentlichen an der Gesamtfläche einer jeden der ersten und zweiten Kernhälften entlang, so daß die Kernhälften im Verhältnis zueinander entlang der gesamten Oberfläche des Kernes exakt ausgerichtet werden.

Jedes der Ausrichtelemente der ersten und zweiten Hälften wird während des Spritzgießverfahrens geformt. Jedes Ausrichtelement wird in Form mehrerer erhabener Elemente, die durch mehrere vertiefte Elemente voneinander getrennt sind, ausgebildet. Die Ausrichtelemente der ersten Kernhälfte sind so konfiguriert, daß sie mit den Ausrichtelementen der zweiten Kernhälfte in Eingriff gelangen, so daß, wenn die ersten und zweiten Kernhälften zusammengefügt werden, die im Eingriff stehenden Ausrichtelemente derart zusammenwirken, daß die beiden Kernhälften im Verhältnis zueinander im wesentlichen entlang der Gesamtfläche des Kernes exakt positioniert werden.

Nachdem die ersten und zweiten Kernhälften geformt sind, werden die Außenflächen einer jeden der Kernhälften mit einer Gewebeschicht oder dgl. überzogen. Bei dem Gewebe kann es sich vorzugsweise um ein Polyamid- oder Polyestermaterial handeln. Die erste Kernhälfte wird vorzugsweise mit dem Polyamid- oder Polyestermaterial überzogen. Die zweite Kernhälfte wird vorzugsweise mit einem Polyamid- oder Polyestermaterial überzogen, das eine Polyesterschaumrückenschicht aufweist, um für die gewünschte Weichheit auf der dem Fahrzeughimmel abgewandten und den Fahrzeuginsassen zugewandten Seite des Kernes zu sorgen. Das Polyamid- oder Polyestermaterial, das als Überzug für die erste Kernhälfte verwendet wird, kann auf Wunsch ebenfalls eine Polyesterschaumrückenschicht aufweisen.

Das Überzugsmaterial wird um eine Außenfläche einer jeden der Kernhälften herumgelegt und überstehendes Überzugsmaterial in die Innenflächen der Kernhälften eingeführt. Das überstehende Überzugsmaterial wird dann mit Kantenkräuselung in die Schale eingefügt. Anschließend wird das Überzugsmaterial mittels Hochfrequenzschweißen, Heißverkleben oder mit Hilfe anderer geeigneter Verbindungsverfahren mit den Kernhälften verbunden.

Nachdem das Überzugsmaterial an den beiden Kernhälften befestigt worden ist, werden die Kernhälften zusammengefügt, indem die Ausrichtelemente einer jeden der beiden Kernhälften im Verhältnis zueinander in Eingriff gebracht werden. Nachdem die beiden Kernhälften im Verhältnis zueinander mit Hilfe ihrer jeweiligen Ausrichtelemente exakt positioniert sind, werden die beiden Kernhälften mittels Spiegelschweißen oder mit Hilfe anderer geeigneter Verfahren aneinander befestigt.

Weitere Merkmale und Vorteile der vorliegenden Erfindung ergeben sich aus der nachstehenden Beschreibung der Erfindung unter Bezugnahme auf die beiliegenden Zeichnungen.
Fig. 1 ist eine auseinandergezogene Detailansicht der beiden Hälften des Kernes gemäß einer Ausführungsform nach vorliegender Erfindung;
Fig. 2 ist eine Seitenteilansicht des Kernes von Fig. 1 mit zwei separaten, miteinander verbundenen Kernhälften.

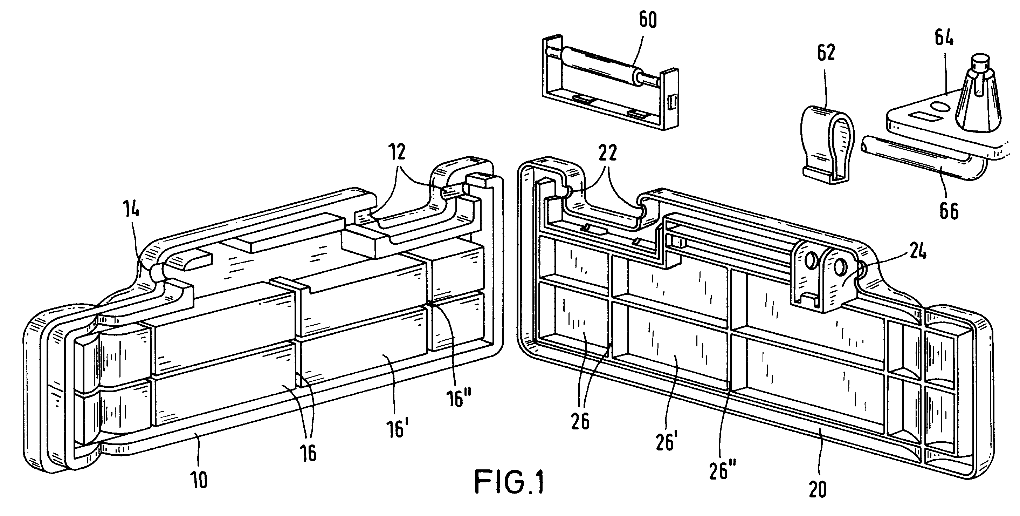

Eine bevorzugte Ausführungsform eines Kernes für eine Fahrzeugsonnenblende ist in Fig. 1 dargestellt. Der Kern ist aus einer ersten Kernhälfte 10 und einer zweiten Kernhälfte 20 geformt.

Die erste Kernhälfte 10 ist aus einem thermoplastischen Material, wie beispielsweise Polypropylen, mittels Spritzgießen geformt. Durch die Verwendung von Polypropylen weist der Kern verschiedene Vorteile auf, wie beispielsweise ausreichende Steifigkeit, geringes Gewicht und konstruktive Stabilität. Außerdem erlaubt die Verwendung von Polypropylen, daß der Kern wiederverwertet werden kann. Aufgrund des Spritzgießverfahrens können die Kernhälften wie gewünscht mit unterschiedlichen Dicken geformt und verschiedene konstruktive Änderungen vorgenommen werden, wie zum Beispiel der Einbau von Kunststoffscharnieren für die Montage der Sonnenblende oder einer Spiegelmontagevorrichtung für einen Schminkspiegel. Die erste Kernhälfte 10 ist vorzugsweise aus einem konzentrierten (kompakten) Polypropylenmaterial geformt.

Die erste Kernhälfte 10 umfaßt eine erste Vertiefung 12 für die Aufnahme eines Lagerungsstiftes, wie nachstehend beschrieben. Die erste Kernhälfte 10 umfaßt außerdem eine zweite Vertiefung 14 für die Aufnahme einer Federklammer, wie ebenfalls nachstehend beschrieben.

Die erste Kernhälfte 10 weist mehrere Ausrichtelemente 16 auf, die an der Kerninnenfläche ausgebildet sind und daraus vorragen. Die Ausrichtelemente 16 werden während des Spritzgießverfahrens so geformt, daß die Ausrichtelemente 16 und die übrige Konstruktion der ersten Kernhälfte 10 einstückig ausgebildet sind. Die Ausrichtelemente 16 umfassen mehrere erhabene Elemente oder Platten 16' und mehrere enge Vertiefungen, wie Nuten 16'', die zwischen den Platten 16' auf der Innenfläche der ersten Kernhälfte 10 ausgebildet sind. Die Vertiefungen 16'' sind zwischen angrenzenden erhabenen Elementen 16' angeordnet, um Ausrichtelemente der zweiten Kernhälfte 20 aufzunehmen, wie nachstehend beschrieben. Obwohl es sich bei den erhabenen Elementen 16', die die Ausrichtelemente bilden, um rechtwinklig geformte Elemente handelt, die in zwei Reihen angeordnet sind, können alle geeigneten geometrischen Formen und Anordnungen der erhabenen Elemente und der Vertiefungen, die sich für ein Ausrichten der beiden Kernhälften eignen, für die Ausbildung der beiden Ausrichtelemente 16 verwendet werden.

Die zweite Kernhälfte 20 ist auch aus einem thermoplastischen Material mittels Spritzgießen geformt. Die zweite Kernhälfte 20 ist vorzugsweise aus einem Polypropylen und Talkum enthaltenden Material geformt. In einer bevorzugten Ausführungsform enthält das zum Formen der zweiten Kernhälfte 20 verwendete Material etwa 80% Polypropylen und 20% Talkum.

Die zweite Kernhälfte 20 weist eine erste Vertiefung 22 für die Aufnahme eines Lagerungsstiftes auf, wie nachstehend beschrieben. Die zweite Kernhälfte 20 weist außerdem ein Aufnahmeelement 24 für die Aufnahme einer Federklammer auf, wie nachstehend beschrieben.

Die zweite Kernhälfte 20 weist außerdem mehrere Ausrichtelemente 26 auf, die an der Innenfläche der zweiten Kernhälfte während des Spritzgießverfahrens so geformt werden, daß die Ausrichtelemente 26 und die übrige Konstruktion der zweiten Kernhälfte 20 einstückig ausgebildet sind. Die Ausrichtelemente 26 umfassen mehrere Vertiefungen bzw. Nuten 26' und mehrere erhabene Elemente 26'' zwischen den Vertiefungen 26', die beide an der Innenfläche der zweiten Kernhälfte 20 ausgebildet sind. Die rechtwinkligen Vertiefungen 26' sind zwischen angrenzenden erhabenen Elementen 26'' ausgebildet. Die erhabenen Elemente 26'' sind so positioniert und geformt, daß sie mit den Vertiefungen 16'' der ersten Kernhälfte 10 im Eingriff stehen können. Die Vertiefungen 26' sind gleichermaßen so positioniert und geformt, daß sie mit den erhabenen Elementen 16' der ersten Kernhälfte 10 im Eingriff stehen können. Obwohl, wie vorstehend beschrieben, die die Ausrichtelemente bildenden Vertiefungen 26' und erhabenen Elemente 26'' rechtwinklige Elemente sind und außerdem in zwei Reihen angeordnet sind, können alle geeigneten geometrischen Formen und Anordnungen, die sich für ein Ausrichten der beiden Kernhälften eignen, für die Ausbildung der Ausrichtelemente 26 verwendet werden.

Die beiden Gruppen der Ausrichtelemente 16', 16'' und 26', 26'' sind so geformt, daß beim Zusammenfügen der beiden Kernhälften 10, 20 die Ausrichtelemente 16', 16'', 26', 26'' zusammenwirken, um die beiden Kernhälften 10, 20 im Verhältnis zueinander so exakt zu positionieren, daß sie einen Sonnen- blendenkern bilden.

Die Ausrichtelemente 16', 16'' und 26', 26'' werden also während des Spritzgießverfahrens problemlos geformt. Durch ihre Verwendung erübrigt sich die Notwendigkeit, ein separates Scharnier zu formen und mit den beiden Kernhälften zu verbinden, wie es bei herkömmlichen Sonnenblendenkernen erforderlich ist. Außerdem sorgen die Ausrichtelemente 16', 16'' und 26', 26'' für eine exaktere Ausrichtung zwischen den ersten und zweiten Kernhälften 10, 20, weil die Kernhälften in verschiedenen Abschnitten im wesentlichen entlang der gesamten Oberfläche einer jeden der beiden Kernhälften ausgerichtet sind anstatt, wie bei herkömmlichen Ausführungen, an einer einzelnen oder an zwei Stellen, an denen ein Scharnier oder Scharniere die beiden Kerne zusammenhalten.

Jede Kernhälfte 10, 20 weist eine jeweilige Vertiefung 12, 22 für die Aufnahme eines Lagerungsstiftes 60 zur Montage der Sonnenblende an einem Fahrzeughimmel auf. Außerdem werden die Kernhälften 10, 20 mit einer Vertiefung 14 bzw. einem Aufnahmeelement 24 für die Aufnahme einer Federklammer 62 ausgebildet, mit deren Hilfe die Sonnenblende an einer Lagerkonsole 64 befestigt wird, sowie einer Achse 66, die zur Befestigung der Sonnenblende am Fahrzeughimmel dient und eine Schwenkbewegung der Sonnenblende um diese Achse 66 ermöglicht.

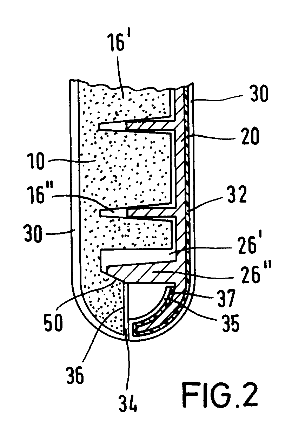

Nach der Formung der ersten und zweiten Kernhälften 10, 20 wird jede Kernhälfte, wie aus Fig. 2 ersichtlich, mit einem Überzug, z. B. einer Gewebeschicht überzogen. Bei dem Gewebe 30, mit dem die Kernhälften überzogen werden, kann es sich vorzugsweise um ein Polyamid- oder Polyestermaterial handeln. Die erste Kernhälfte 10 erhält lediglich einen aus der Polyamid- oder Polyestermaterialschicht 30 bestehenden Überzug. Die zweite Hälfte 20 erhält einen aus einer Polyamid- oder Polyestermaterialschicht 30 bestehenden Überzug mit einer Polyesterschaumrückenschicht 32, um so für die gewünschte Weichheit auf der dem Fahrzeughimmel abgewandten Seite des Kernes zu sorgen.

Die Überzugsmaterialschicht 30 wird um eine Außenfläche der ersten Kernhälfte 10 herumgelegt und überstehendes Überzugsmaterial 34 in die Innenfläche der ersten Kernhälfte eingeführt. Dann wird das überstehende Überzugsmaterial 34 mit Kantenkräuselung in die Innenfläche der ersten Kernhälfte 10 eingefügt. Das Überzugsmaterial 30 wird anschließend mittels Heißverkleben 36 oder mit Hilfe eines anderen geeigneten Verbindungsverfahrens mit der ersten Kernhälfte 10 verbunden. Während des Heißklebeverfahrens wird das zum Formen der ersten Kernhälfte 10 verwendete Polypropylenmaterial mit dem Überzugsmaterial 30 verschmolzen, um den Überzug an der ersten Kernhälfte 10 zu befestigen.

Das Überzugsmaterial 30 mit einer Polyesterschaumrückenschicht 32 wird um eine Außenfläche der zweiten Kernhälfte 20 herumgelegt und überstehendes Überzugsmaterial 35 in die Innenfläche der zweiten Kernhälfte 20 eingeführt. Das überstehende Überzugsmaterial 35 wird dann mit Kantenkräuselung in die Innenfläche der zweiten Kernhälfte 20 eingefügt. Anschließend wird das Überzugsmaterial 30 mit der Polyesterschaumrückenschicht 32 mittels Hochfrequenzschweißen 37 oder mit Hilfe eines anderen geeigneten Verfahrens mit der zweiten Kernhälfte 20 verbunden. Das Hochfrequenzschweißverfahren bewirkt, daß das zum Formen der zweiten Kernhälfte 20 verwendete Polypropylenmaterial an der Schaumrückenschicht 32 haftet, so daß der Überzug an der zweiten Kernhälfte 20 befestigt wird.

Nachdem jede der Kernhälften 10, 20 mit einem Überzug versehen ist, werden die Kernhälften 10, 20 zusammengefügt, indem die Ausrichtelemente 16', 16'' und 26', 26'' im Verhältnis zueinander in Eingriff gebracht werden, wie aus Fig. 2 ersichtlich. Wie bereits vorstehend ausgeführt, gewährleisten die Ausrichtelemente 16', 16'' und 26', 26'' eine exakte Ausrichtung der beiden Kernhälften 10, 20 im Verhältnis zueinander im wesentlichen entlang der gesamten Oberfläche des Kernes. Nachdem die beiden Kernhälften 10, 20 im Verhältnis zueinander von den entsprechenden Ausrichtelementen 16', 16'' und 26', 26'' exakt positioniert worden sind, werden die beiden Hälften mittels Spiegelschweißen 50 oder mit Hilfe eines anderen geeigneten Zusammenfügeverfahrens aneinander befestigt.

Obwohl die Beschreibung der vorliegenden Erfindung auf einer speziellen Ausführungsform beruht, ist es für den Fachmann offensichtlich, daß viele andere Variationen und Modifizierungen sowie andere Anwendungen möglich sind. Die vorliegende Erfindung sollte daher vorzugsweise keinerlei Einschränkung durch diese Beschreibung erfahren, sondern nur durch die beiliegenden Ansprüche.

## Patentansprüche

1. Sonnenblende mit einem Sonnenblendenkern, der folgende Bestandteile umfaßt: Eine erste Kernhälfte (10) und eine zweite Kernhälfte (20), die jeweils aus einem thermoplastischen Material geformt sind, wobei die erste Kernhälfte (10) gegenüber der zweiten Kernhälfte (20) ein vollständig separates Element darstellt, so daß die Kernhälften (10, 20), bevor sie zusammengefügt werden, nicht miteinander verbunden sind; erste Ausrichtelemente (16), die an der ersten Kernhälfte (10) angeordnet sind; zweite Ausrichtelemente (26), die an der zweiten Kernhälfte (20) angeordnet sind, um mit den ersten Ausrichtelementen (16) in Eingriff zu gelangen, so daß die zweite Kernhälfte (20) im Verhältnis zur ersten Kernhälfte (10) ausgerichtet wird; wobei die separaten ersten und zweiten Kernhälften (10, 20) zusammengefügt werden, um durch den Eingriff der ersten Ausrichtelemente (16) mit den zweiten Ausrichtelementen (26) ausgerichtet zu werden.

2. Sonnenblende nach Anspruch 1, dadurch gekennzeichnet, daß der Sonnenblendenkern weiterhin Elemente zum Miteinanderverbinden der ersten und zweiten Kernhälften (10, 20), nachdem die Ausrichtelemente (16) und (26) in Eingriff miteinander stehen, umfaßt.

3. Sonnenblende nach Anspruch 1 oder 2, dadurch gekennzeichnet, daß der Sonnenblendenkern weiterhin an einer jeden der ersten und zweiten Kernhälften (10) und (20) eine Innenfläche, die der anderen Innenfläche zugewandt ist, sowie eine gegenüberliegende Außenfläche umfaßt und der eine jeweilige erste und zweite einen Überzug (30) umfaßt, mit dem die Außenfläche einer jeden der ersten bzw. zweiten Kernhälften (10) bzw. (20) überzogen ist.

4. Sonnenblende nach Anspruch 3, dadurch gekennzeichnet, daß der Sonnenblendenkern weiterhin Elemente zum Verbinden der ersten und zweiten Überzüge (30) mit den ersten bzw. zweiten Kernhälften (10) und (20) umfaßt.

5. Sonnenblende nach Anspruch 3 oder 4, dadurch gekennzeichnet, daß der erste Überzung (30) ein Polyamidgewebe und der zweite Überzung (30) ein Polyamidgewebe mit einer Polyesterschaumrückenschicht (32) umfaßt.

6. Sonnenblende nach wenigstens einem der vorangegangenen Ansprüche, dadurch gekennzeichnet, daß jede der ersten und zweiten Kernhälften (10, 20) so geformt ist, daß sie eine erste Vertiefung (22) für die Aufnahme eines Lagerungsstiftes (60) und eine zweite Vertiefung (12) für die Aufnahme einer Federklammer (62) umfaßt, um damit den Sonnenblendenkern am Fahrzeughimmel zu montieren.

7. Sonnenblende nach wenigstens einem der vorangegangenen Ansprüche, dadurch gekennzeichnet, daß jede der ersten und zweiten Kernhälften (10, 20) eine Innenfläche, die der anderen Innenfläche zugewandt ist, sowie eine gegenüberliegende Außenfläche umfaßt und die ersten Ausrichtelemente (16) mehrere erhabene Elemente (16') umfassen, die durch mehrere Nuten (16'') voneinander getrennt sind, die so geformt und positioniert sind, daß sie mit den zweiten Ausrichtelementen (26) im Eingriff stehen, wobei die ersten Ausrichtelemente (16) im wesentlichen entlang der gesamten Innenfläche des Sonnenblendenkernes angeordnet sind und wobei die zweiten Ausrichtelemente (26) mehrere erhabene Elemente (26'') und mehrere Nuten (26') umfassen, die so geformt und positioniert sind, daß sie in sich ergänzender Weise mit den ersten Ausrichtelementen (16) im Eingriff stehen und die im wesentlichen entlang einer Gesamtfläche des Sonnenblendenkerns angeordnet sind.

8. Verfahren zur Herstellung einer Sonnenblende, das folgende Schritte umfaßt: Formen einer ersten Kernhälfte (10) aus einem thermoplastischen Material mit ersten Ausrichtelementen (16) an einer Innenfläche der ersten Kernhälfte (10), Formen einer zweiten Kernhälfte (20) aus einem thermoplastischen Material mit zweiten Ausrichtelementen (26) auch an einer Innenfläche der zweiten Kernhälfte (20), wobei die zweiten Ausrichtelemente (26) so ausgebildet, geformt und positioniert sind, daß sie in sich ergänzender Weise mit den ersten Ausrichtelementen (16) im Eingriff stehen können und wobei die zweite Kernhälfte (20) gegenüber der ersten Kernhälfte (10) ein vollständig separates Element darstellt, Ausrichten der ersten Kernhälfte (10) gegenüber der zweiten Kernhälfte (20) durch Eingriff der ersten Ausrichtelemente (16) mit den zweiten Ausrichtelementen (26), wobei die ersten und zweiten Ausrichtelemente (16) bzw. (26) für die entsprechende Ausrichtung zwischen der ersten Kernhälfte (10) und der zweiten Kernhälfte (20) sorgen und Verbinden der ersten Kernhälfte (10) mit der zweiten Kernhälfte (20).

9. Verfahren nach Anspruch 8, das weiterhin das Überziehen der ersten Kernhälfte (10) mit einem ersten Überzug (30) und das Überziehen der zweiten Kernhälfte (20) mit einem zweiten Überzug umfaßt, bevor die erste Kernhälfte (10) und die zweite Kernhälfte (20) zusammengefügt werden.

10. Verfahren nach Anspruch 9, das weiterhin die Kantenkräuselung einer jeden der ersten und zweiten Überzugsmaterialschichten (30) auf der ersten bzw. zweiten Kernhälfte (10) bzw. (20) umfaßt.

11. Verfahren nach Anspruch 9, das weiterhin das Verbinden der ersten Überzugsmaterialschicht (30) mit der ersten Kernhälfte (10) mittels Heißverkleben (36) und das Verbinden der zweiten Überzugsmaterialschicht (30) mit der zweiten Kernhälfte (20) mittels Hochfrequenzschweißen (37) umfaßt.

12. Verfahren nach Anspruch 8, wobei die ersten Ausrichtelemente (16), die während des Schrittes des Formens der ersten Kernhälfte (10) ausgebildet werden, mehrere erste erhabene Elemente (16') und erste Vertiefungen bzw. Nuten (16'') und die zweiten Ausrichtelemente (26), die während des Schrittes des Formens der zweiten Kernhälfte (20) ausgebildet werden, mehrere zweite erhabene Elemente (26'') und zweite Vertiefungen bzw. Nuten (26') umfassen, die in sich ergänzender Weise so geformt sind, daß sie mit den ersten erhabenen Elementen (16') und den ersten Vertiefungen bzw. Nuten (16'') im Eingriff stehen, um die ersten und zweiten Kernhälften (10, 20) auszurichten.

13. Verfahren nach Anspruch 8, wobei das Verbinden der ersten und zweiten Kernhälften (10, 20) das Spiegelschweißen der ersten und zweiten Kernhälften (10, 20) umfaßt.
